# EUROPEAN PATENT APPLICATION

(11) **EP 4 443 968 A1**
(43) Date of publication of application: **09.10.2024**
(21) Application number: 24168271.5
(22) Date of filing: 03.04.2024
(51) Int. Cl.: H04W 36/00, H04W 56/00, H04W 74/0833

(54) **METHOD AND DEVICE FOR CONTROLLING MOBILITY**

(30) Priority: 05.04.2023 KR 20230044611; 19.03.2024 KR 20240037580
(71) Applicant: KT Corporation, Seongnam-si, Gyeonggi-do 13606 (KR)
(72) Inventor: HONG, Sung-pyo, 13606 Seongnam-si Gyeonggi-do (KR)
(74) Representative: Brevalex

(57) **Abstract**

Provided are method and apparatus for controlling the mobility of a UE in a mobile communication system. The method may include receiving an RRC reconfiguration message including an L1/L2 triggered mobility (LTM) candidate cell configuration from a network node, transmitting a random access preamble to the LTM candidate cell based on a PDCCH order of a serving cell to perform an early synchronization operation for obtaining an uplink timing advance of an LTM candidate cell, receiving a MAC control element (CE) including a cell switch command from the serving cell, and performing a cell switching operation to a target cell based on the MAC CE.

## Description

### CROSS-REFERENCE TO RELATED APPLICATION

This application claims priority from Korean Patent Application Nos. 10-2023-0044611, filed on April 5, 2023, and 10-2024-0037580, filed on March 19, 2024, which are hereby incorporated by reference for all purposes as if fully set forth herein.

### BACKGROUND

### Field

The disclosure relates to technology for controlling the mobility of a UE in a mobile communication system.

### Description of Related Art

The proliferation of small wireless communication devices, including smartphones, has resulted in an increasing number of users. This expansion is not limited to smartphones alone; various modes of transportation, such as cars and airplanes, are now equipped with wireless communication devices, enabling connectivity on the go.

As a wireless communication device traverses different areas, it transitions from the coverage of one cell to another. The advent of high-speed transportation means, including vehicles, underscores the necessity for seamless cell switching.

The cell switching is referred to as handover. Typically, a user equipment (UE) in a radio resource control (RRC) connected state undergoes handover through RRC signaling. However, when handover is performed based on L3 signaling, the handover procedure between the base station, core network entity, and UE becomes intricate and time consuming.

Consequently, it is challenging to fulfill the requirements for low-latency, high-speed movement in the era of post-5G communication. In particular, as high-speed mobility becomes more common and as technology evolves to support communication at the beam level, maintaining user communication quality is critical. In this respect, there is a clear demand for technology aimed at achieving low latency, along with reducing overhead and minimizing interruption time during handover.

### BRIEF SUMMARY

The present disclosure is to provide a method and device for quickly controlling a control switching operation of a UE at a lower layer.

In an aspect, the present disclosure is to provide a method for controlling mobility of a user equipment (UE). The method may include receiving an RRC reconfiguration message including an L1/L2 triggered mobility (LTM) candidate cell configuration from a network node, transmitting a random access preamble to the LTM candidate cell based on a PDCCH order of a serving cell to perform an early synchronization operation for obtaining an uplink timing advance of an LTM candidate cell, receiving a MAC control element (CE) including a cell switch command from the serving cell, and performing a cell switching operation to a target cell based on the MAC CE.

In another aspect, the present disclosure is to provide a method for controlling a mobility operation of a UE by a network node. The method may include transmitting, to the UE, an RRC reconfiguration message including an L1/L2 triggered mobility (LTM) candidate cell configuration, transmitting, to the UE, a PDCCH order for indicating early synchronization for an LTM candidate cell of the UE, receiving at least one of uplink timing advance information about the LTM candidate cell, random access preamble information, and LTM candidate cell identification information from a target network node where the LTM candidate cell belongs, and transmitting, to the UE, a MAC control element (CE) including a cell switch command to a target cell.

In still another aspect, the present disclosure is to provide a UE performing a mobility control operation. The UE may include a receiver receiving an RRC reconfiguration message including an L1/L2 triggered mobility (LTM) candidate cell configuration from a network node, a transmitter transmitting a random access preamble to the LTM candidate cell based on a PDCCH order of a serving cell to perform an early synchronization operation for obtaining an uplink timing advance of an LTM candidate cell, and a controller performing a cell switching operation to a target cell based on a MAC control element (CE) including a cell switch command received from the serving cell.

In further another aspect, the present disclosure is to provide a network node controlling a mobility operation of a UE. The network node may include a transmitter transmitting, to the UE, an RRC reconfiguration message including an L1/L2 triggered mobility (LTM) candidate cell configuration and transmitting, to the UE, a PDCCH order for indicating early synchronization for an LTM candidate cell of the UE, and a receiver receiving at least one of uplink timing advance information about the LTM candidate cell, random access preamble information, and LTM candidate cell identification information from a target network node where the LTM candidate cell belongs, wherein the transmitter transmits, to the UE, a MAC control element (CE) including a cell switch command to a target cell.

According to the method and device in accordance with embodiments, cell switching may performed quickly at a lower layer.

### DESCRIPTION OF DRAWINGS

The above and other aspects, features, and advantages of the disclosure will be more apparent from the following detailed description taken in conjunction with the accompanying drawings, in which:
FIG. 1 is a view schematically illustrating an NR wireless communication system to which at least one embodiment is applicable;
FIG. 2 is a view for explaining a frame structure in an NR system to which at least one embodiment is applicable;
FIG. 3 is a view for explaining resource grids supported by a radio access technology to which at least one embodiment is applicable;
FIG. 4 is a view for explaining bandwidth parts supported by a radio access technology to which at least one embodiment is applicable;
FIG. 5 is a view illustrating an example of a synchronization signal block in a radio access technology to which at least one embodiment is applicable;
FIG. 6 is a view for explaining a random access procedure in a radio access technology to which at least one embodiment is applicable;
FIG. 7 is a view for explaining CORESET;
FIG. 8 is a flowchart for describing operations of a UE according to an embodiment;
FIG. 9 is a flowchart for illustrating operations of a network node according to another embodiment;
FIG. 10 is a view illustrating a signaling procedure for LTM according to an embodiment;
FIG. 11 is a view illustrating an uplink-downlink timing relationship;
FIG. 12 is a block diagram illustrating a UE according to another embodiment; and
FIG. 13 is a block diagram illustrating a network node according to another embodiment.

### DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (a), (b) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information through a control channel, such as a physical downlink control channel (PDCCH) and a physical uplink control channel (PUCCH). The uplink and downlink transmit and receive data through a data channel such as a physical downlink shared channel (PDSCH) and a physical uplink shared channel (PUSCH). Hereinafter, the transmission and reception of a signal through a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR discloses a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

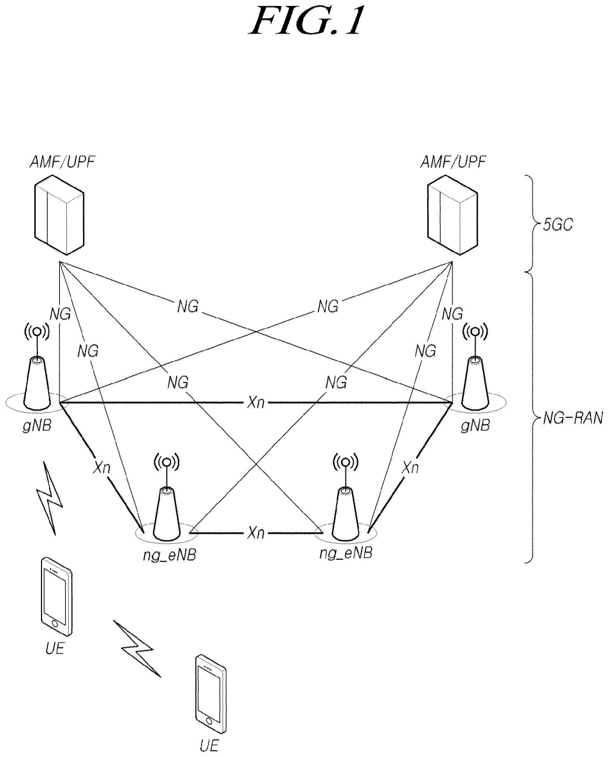

FIG. 1 is a view schematically illustrating an NR system to which the present embodiment is applicable.

Referring to FIG. 1, the NR system is divided into a 5G core network (5GC) and an NG-RAN part, and the NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1: FR1) and frequency bands equal to or greater than 6 GHz (frequency range 2: FR2).

The gNB denotes a base station that provides a UE with an NR user plane and control plane protocol end, and the ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario through frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP), and, as shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols.

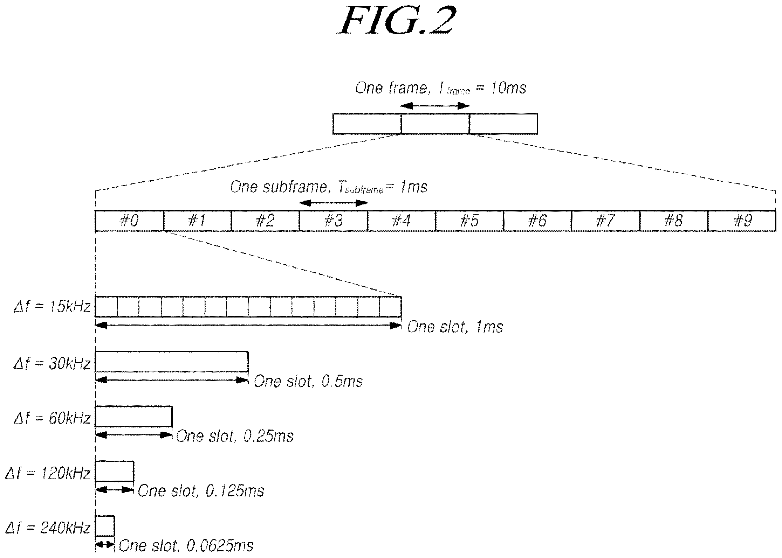

FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

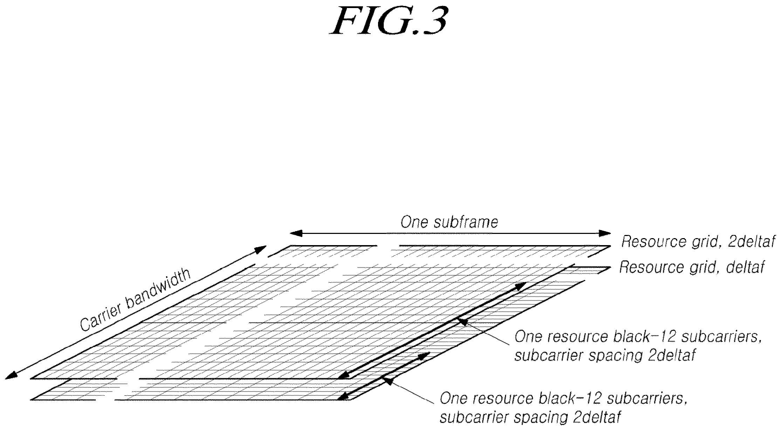

FIG. 3 is a view for explaining resource grids supported by a radio access technology to which the present embodiment is applicable.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

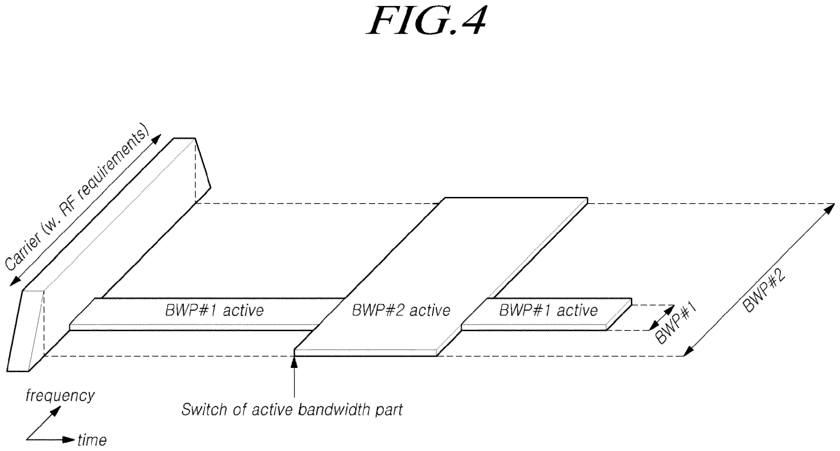

FIG. 4 is a view for explaining bandwidth parts supported by a radio access technology to which the present embodiment is applicable.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink, and the UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs so as to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

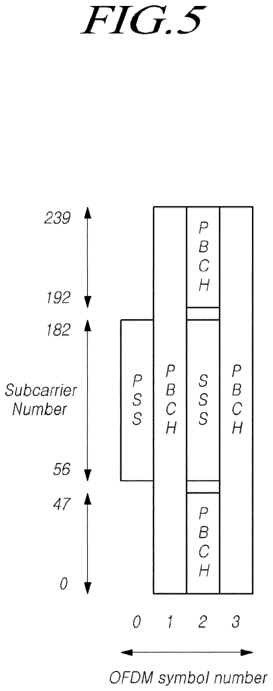

FIG. 5 is a view illustrating an example of a synchronization signal block in a radio access technology to which the present embodiment is applicable.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that can be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB through the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB 1 (e.g., SIB1 numerology information, information related to SIB 1 CORESET, search space information, PDCCH-related parameter information, etc.), offset information between the common resource block and the SSB (the position of an absolute SSB in the carrier is transmitted via SIB 1), and the like. The SIB1 numerology information is also applied to some messages used in the random access procedure for the UE to access the base station after completing the cell search procedure. For example, the numerology information of SIB 1 may be applied to at least one of the messages 1 to 4 for the random access procedure.

The above-mentioned RMSI may mean SIB 1 (system information block 1), and SIB 1 is broadcast periodically (e.g., 160 ms) in the cell. SIB 1 includes information necessary for the UE to perform the initial random access procedure, and SIB 1 is periodically transmitted through a PDSCH. In order to receive SIB 1, the UE must receive numerology information used for the SIB 1 transmission and the CORESET (control resource set) information used for scheduling of SIB 1 through a PBCH. The UE identifies scheduling information for SIB 1 using SI-RNTI in the CORESET, and acquires SIB1 on the PDSCH according to scheduling information. The remaining SIBs other than SIB 1 may be periodically transmitted, or the remaining SIBs may be transmitted according to the request of the UE.

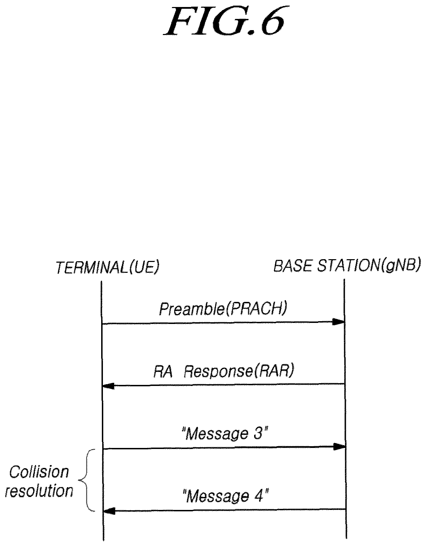

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted through a PRACH. Specifically, the random access preamble is periodically transmitted to the base station through the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

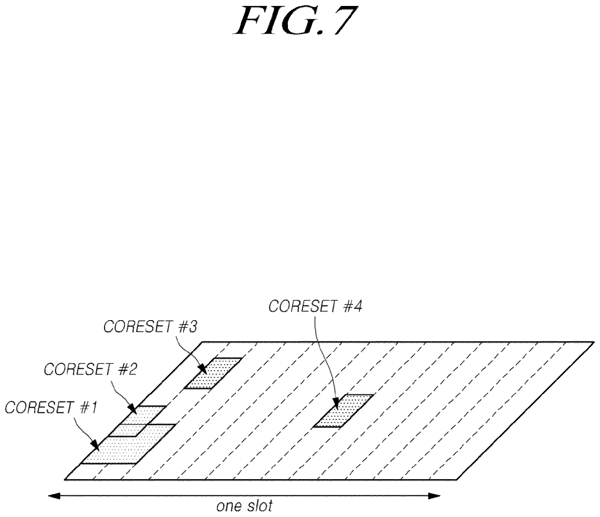

FIG. 7 is a view for explaining CORESETs.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

This disclosure specifies that terms including a frequency, a frame, a subframe, a resource, a resource block, a region, a band, a subband, a control channel, a data channel, a synchronization signal, various reference signals, various signals, or various messages in relation to NR (New Radio) should be understood as encompassing their current, historical, or further meanings. This broad interpretation allows for flexibility in addressing the evolving landscape of New Radio technology.

### NR mobility

In typical NR technology, mobility control of cell change for UE in a RRC connected state indicates (e.g., instructs) handover through explicit RRC signaling. Cell change may be triggered by L3 measurement, and handover could be executed through RRC message signaling including information necessary for accessing the target cell (one or more pieces of information among reconfiguration with Sync, target cell ID, the new C-RNTI, the target gNB security algorithm identifiers for the selected security algorithms, a set of dedicated RACH resources, the association between RACH resources and SSB(s), the association between RACH resources and UE-specific CSI-RS configuration(s), common RACH resources, and system information of the target cell). When cell change is executed, the MAC entity of the corresponding cell group is reset. The received new C-RNTI value is applied as the C-RNTI of the cell group. It is configured according to the configuration information received for the PHY/MAC/RLC/PDCP/SDAP layer. This results in greater delays, increased overhead, and longer interruptions compared to beam change (beam level mobility) in the same cell.

Beam level mobility does not require explicit RRC signaling to be triggered in the beam change process. The base station (e.g., network) may provide measurement configuration including SSB/CSI resource and resource set, trigger state for triggering channel, and interference measurement and report the measurement configuration to the UE through RRC signaling. Beam level mobility may be provided through control signaling (e.g., DCI or MAC CE) of physical layer/MAC layer at a lower layer. SSB-based beam level mobility is based on SSB associated with the initial downlink BWP and may be configured only for downlink BWPs including the initial BWP and the SSB associated with the initial downlink BWP. Beam level mobility for other DL BWPs could be performed based only on CSI-RS.

However, typical beam switching supports only intra-cell mobility. Accordingly, in the mobility control operation, such as handover that occurs as the UE moves, the ability to quickly establish connection (e.g., rapid mobility connection) is restricted.

To address such issue, L1/L2 triggered mobility (LTM) technology has been introduced, enabling cell change/switch through L1/L2 signaling.

In the disclosure, the term Layer 1/Layer 2 triggered mobility (LTM) is used for simplicity to describe mobility control initiated at the L 1/L2 . However, the disclosure is not limited thereto. In other words, LTM refers to a procedure where the base station receives an L1 measurement report from the UE and, based on this information, transfers a cell switch command to the UE through the medium access control (MAC) control element (CE) to change the serving cell(s) of the UE. The MAC CE may indicate (e.g., instruct, specify) the LTM candidate cell configuration that the base station previously provided to the UE through RRC signaling. Accordingly, although terms other than LTM are used to describe the above-described cell change operation, the embodiments are still applicable.

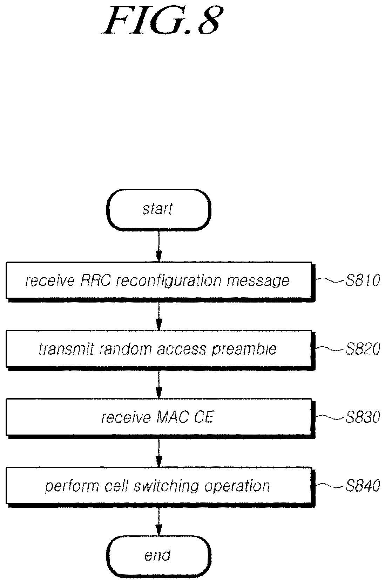

FIG. 8 is a flowchart for describing operations of a UE according to an embodiment.

Referring to FIG. 8, a mobility control method of a UE may include receiving an RRC reconfiguration message including L1/L2 triggered mobility (LTM) candidate cell configuration from a network node (S810).

For example, information and configuration different from the typical L3 handover operation may be required to perform the LTM operation. To that end, the UE may receive an RRC reconfiguration message including an LTM candidate cell configuration.

For example, the LTM candidate cell configuration may include at least one of identification information for identifying the LTM candidate cell configuration, physical cell ID (PCI) information about a special cell included in the LTM candidate cell configuration, and configuration information for the early synchronization. For example, one or more LTM candidate cell configurations may be included in the RRC reconfiguration message. Accordingly, identification information (e.g., ltm-CandidateId) may be included for each LTM candidate configuration to identify each LTM candidate cell configuration. As another example, when a special cell is included in the LTM candidate cell configuration, PCI information (e.g., ltm-CandidatePCI) for the special cell may be included. The special cell may be a PCell, a PSCell, an SpCell, or the like, and may refer to a cell that may be a reference for handover or may transmit an uplink signal. As another example, the LTM candidate cell configuration may include configuration information (e.g., ltm-EarlyUL-SyncConfig, ltm-EarlyUL-SyncConfigSUL) for early synchronization. The configuration information for early synchronization may be configured for each LTM candidate cell configuration. Alternatively, the configuration information for early synchronization may be configured for each LTM candidate cell.

The above-described LTM candidate cell configuration may be received from a network node connected to the UE with an RRC connection. Here, the network node may be a base station that provides a serving cell when it is not a CU-DU separated structure. When it is a CU-DU separated structure, the network node may mean a DU that provides a serving cell to the UE. In this case, an LTM operation may be used to control mobility between DUs. In other words, the LTM operation may be used even when changing between DUs in the same base station.

When the LTM candidate cell configuration (e.g., LTM-Config) is received from the network node, the UE stores the LTM candidate cell configuration (e.g., LTM-Config) in the UE. Thereafter, the UE transmits an RRC reconfiguration complete message to the network node.

The mobility control method of the UE may include transmitting a random access preamble to the LTM candidate cell based on a PDCCH order of a serving cell to perform an early synchronization operation for obtaining an uplink timing advance of an LTM candidate cell (S820).

For example, the UE may perform an early synchronization operation for LTM operation. The early synchronization operation may be performed by the UE to obtain the uplink timing advance of the LTM candidate cell. Alternatively, the early synchronization operation may be performed by the UE to obtain downlink synchronization of the LTM candidate cell. Alternatively, the early synchronization operation may include both the downlink synchronization operation and the uplink timing advance (TA) acquisition operation.

For example, the UE may transmit the random access preamble to the base station or the DU providing the LTM candidate cell based on the PDCCH order of the serving cell in the early synchronization operation. In this case, the UE is configured not to monitor the random access response to the random access preamble. In other words, unlike the typical random access procedure, the UE only transmits the random access preamble to the LTM candidate cell and does not perform a monitoring operation in the RAR window to receive a response thereto.

As another example, the PDCCH order may include cell indication information indicating an LTM candidate cell for transmitting a random access preamble. The UE may receive a PDCCH order through a serving cell. The PDCCH order may be downlink control information. For example, the PDCCH order may include information indicating which LTM candidate cell to transmit the random access preamble among the plurality of LTM candidate cells corresponding to the LTM candidate cell configuration configured through the RRC reconfiguration message to the UE. The cell indication information may be mapped in ascending order of the identification information for identifying the LTM candidate cell configuration and indicated through a field of downlink control information (DCI) format 1_0. In other words, the PDCCH order is DCI, and the LTM candidate cell may be indicated through the value of the cell indication field of DCI format 1_0. For example, bit field index 0 of the cell indication field may be mapped to the serving cell, another bit field index may be mapped to the candidate cell including configuration information (EarlyUlSyncConfig) for early synchronization, which is a higher layer parameter, according to an ascending order of the candidate ID including LTM cell configuration identification information (ltm-CandidateId), and bit field index 1 may be mapped to the candidate cell having the smallest candidate ID. (The bit field index 0 of the cell indicator field is mapped to the serving cell, and other bit field indexes are mapped to the candidate cells configured with higher layer parameter EarlyUlSyncConfig according to an ascending order of a candidate identity configured by ltm-CandidateId, with the bit field index 1 mapped to the candidate cell with the smallest candidate identity.)

The UE may transmit the random access preamble according to the PDCCH order and terminate the early synchronization operation.

The mobility control method of the UE may include receiving a MAC control element (CE) including a cell switch command from the serving cell (S830).

For example, the UE may receive the cell switch command from the network node providing the serving cell through the MAC CE. For example, the MAC CE may include at least of uplink timing advance information, random access preamble information, and target cell identification information about the target cell.

The UE may report the L1 measurement result to the network node before receiving the MAC CE. The network node may determine to perform the LTM operation on the UE based on the L1 measurement result and transmit the MAC CE to instruct the target cell to perform the LTM operation from among the LTM candidate cells.

Meanwhile, the network node may receive at least one of uplink timing advance information about the LTM candidate cell, random access preamble information, and LTM candidate cell identification information from a target network node where the LTM candidate cell belongs. The network node may transmit the MAC CE to the UE using the information received from another network node and the L1 measurement result.

Meanwhile, when the network node is a distributed unit (DU) providing the serving cell to the UE, and the target network node is another DU providing an LTM candidate cell, at least one of uplink timing advance information, random access preamble information, and LTM candidate cell identification information for LTM candidate cell may be received through the central unit (CU).

For example, the other DU transfers the above-described information to the CU through the F1 message, and the CU transfers the above-described information to the DU providing the serving cell through the F 1 message. The CU is connected to the DU and the other DU to configure one base station.

If the network node is the source base station and the network node providing the LTM candidate cell is another base station, the above-described information may be received through an interface between base stations.

The mobility control method of the UE may include performing a cell switching operation to the target cell based on the MAC CE (S840).

For example, the UE may determine whether to perform a random access procedure with the target cell based on whether the MAC CE includes valid uplink timing advance information of the MAC CE. For example, the UE performs the random access procedure with the target cell when the MAC CE does not include the valid uplink timing advance information. As another example, when the MAC CE includes valid uplink timing advance information, the UE may perform a handover according to the LTM operation without performing a random access procedure with the target cell.

Through the above operations, the UE may perform a faster handover operation than typical L3 handover. In particular, the time required to perform the random access procedure may be reduced through an early synchronization operation.

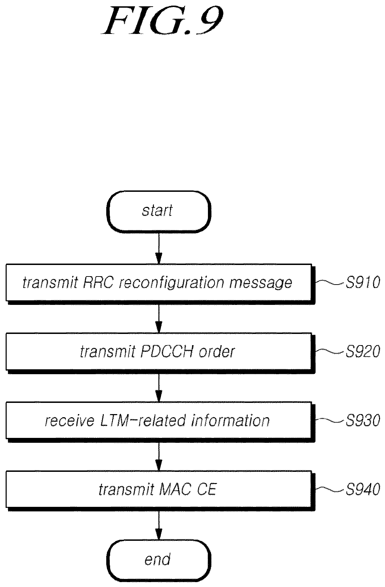

FIG. 9 is a flowchart illustrating operations of a network node according to an embodiment.

Referring to FIG. 9, a method for controlling a mobility operation of a UE by a network node may include transmitting, to the UE, an RRC reconfiguration message including L1/L2 triggered mobility (LTM) candidate cell configuration (S910).

For example, information and configuration different from the typical L3 handover operation may be required to perform the LTM operation. To that end, the network node may transmit an RRC reconfiguration message including an LTM candidate cell configuration to the UE.

For example, the LTM candidate cell configuration may include at least one of identification information for identifying the LTM candidate cell configuration, physical cell ID (PCI) information about a special cell included in the LTM candidate cell configuration, and configuration information for the early synchronization. For example, one or more LTM candidate cell configurations may be included in the RRC reconfiguration message. Accordingly, identification information (e.g., ltm-CandidateId) may be included for each LTM candidate configuration to identify each LTM candidate cell configuration. As another example, when a special cell is included in the LTM candidate cell configuration, PCI information (e.g., ltm-CandidatePCI) for the special cell may be included. The special cell may be a PCell, a PSCell, an SpCell, or the like, and may refer to a cell that may be a reference for handover or may transmit an uplink signal. As another example, the LTM candidate cell configuration may include configuration information (e.g., ltm-EarlyUL-SyncConfig, ltm-EarlyUL-SyncConfigSUL) for early synchronization. The configuration information for early synchronization may be configured for each LTM candidate cell configuration. Alternatively, the configuration information for early synchronization may be configured for each LTM candidate cell.

The network node may be a base station that provides a serving cell when it is not a CU-DU separated structure. When it is a CU-DU separated structure, the network node may be a DU that provides a serving cell to the UE. In this case, an LTM operation may be used to control mobility between DUs. In other words, the LTM operation may be used even when changing between DUs in the same base station.

When the LTM candidate cell configuration (e.g., LTM-Config) is received from the network node, the UE stores the LTM candidate cell configuration (e.g., LTM-Config) in the UE. Thereafter, the network node receives the RRC reconfiguration complete message transmitted from the UE.

The method for controlling the mobility operation of the UE by the network node may include transmitting, to the UE, a PDCCH order for indicating early synchronization for an LTM candidate cell of the UE (S920).

For example, the UE may perform an early synchronization operation for LTM operation. The early synchronization operation may be performed by the UE to obtain the uplink timing advance of the LTM candidate cell. Alternatively, the early synchronization operation may be performed by the UE to obtain downlink synchronization of the LTM candidate cell. Alternatively, the early synchronization operation may include both the downlink synchronization operation and the uplink timing advance (TA) acquisition operation.

To indicate the early synchronization operation of the UE, the network node may transmit a PDCCH order to the UE.

For example, the UE may transmit the random access preamble to the base station or the DU providing the LTM candidate cell based on the PDCCH order of the serving cell in the early synchronization operation. In this case, the UE is configured not to monitor the random access response to the random access preamble. In other words, unlike the typical random access procedure, the UE only transmits the random access preamble to the LTM candidate cell and does not perform a monitoring operation in the RAR window to receive a response thereto.

As another example, the PDCCH order may include cell indication information indicating an LTM candidate cell for transmitting a random access preamble. The network node may transmit a PDCCH order to the UE. The PDCCH order may be downlink control information. For example, the PDCCH order may include information indicating which LTM candidate cell to transmit the random access preamble among the plurality of LTM candidate cells corresponding to the LTM candidate cell configuration configured through the RRC reconfiguration message to the UE. The cell indication information may be mapped in ascending order of the identification information for identifying the LTM candidate cell configuration and indicated through a field of downlink control information (DCI) format 1_0. In other words, the PDCCH order is DCI, and the LTM candidate cell may be indicated through the value of the cell indication field of DCI format 1_0. For example, bit field index 0 of the cell indication field may be mapped to the serving cell, another bit field index may be mapped to the candidate cell including configuration information (EarlyUlSyncConfig) for early synchronization, which is a higher layer parameter, according to an ascending order of the candidate ID including LTM cell configuration identification information (ltm-CandidateId), and bit field index 1 may be mapped to the candidate cell having the smallest candidate ID. (The bit field index 0 of the cell indicator field is mapped to the serving cell, and other bit field indexes are mapped to the candidate cells configured with higher layer parameter EarlyUlSyncConfig according to an ascending order of a candidate identity configured by ltm-CandidateId, with the bit field index 1 mapped to the candidate cell with the smallest candidate identity.)

The UE performs an early synchronization operation on the LTM candidate cell according to the PDCCH order of the network node.

The method for controlling the mobility operation of the UE by the network node may include receiving at least one of uplink timing advance information about the LTM candidate cell, random access preamble information, and LTM candidate cell identification information from a target network node where the LTM candidate cell belongs (S930).

For example, the network node may receive information for an LTM operation from another network node (e.g., a target network node) that provides the LTM candidate cell to which the UE transmits the random access preamble. Information for LTM operation may be received through an interface between network nodes. For example, when both the network node and the target network node are DUs, information for LTM operation may be transmitted and received through the CU through the message of the F1 interface. Alternatively, when the network node and the target network node are different base stations, the message may be received through a communication interface between the base stations. For example, information for LTM operation may be transferred through the X2 interface.

The method for controlling the mobility operation of the UE by the network node may include transmitting, to the UE, a MAC control element (CE) including a cell switch command to the target cell (S940).

For example, the network node may transmit the MAC CE to the UE using the information received from the other network node (e.g., the target network node) and the L1 measurement result.

The MAC CE may include at least of uplink timing advance information, random access preamble information, and target cell identification information about the target cell.

The UE may report the L1 measurement result to the network node before receiving the MAC CE. The network node may determine to perform the LTM operation on the UE based on the L1 measurement result and transmit the MAC CE to instruct to perform the LTM operation to the target cell from among the LTM candidate cells.

At least one of the uplink timing advance information, the random access preamble information, and the target cell identification information included in the MAC CE is information about the target cell determined by the network node. For example, at step S930, the network node may receive at least one of uplink timing advance information, random access preamble information, and target cell identification information from two or more LTM candidate cells. The network node may i) determine a target cell for the UE to perform a cell switch from among the LTM candidate cells considering the L1 measurement report information received from the UE, ii) include at least one of uplink timing advance information, random access preamble information, and target cell identification information received from the other network node of the target cell in the MAC CE and iii) transmit the same.

Meanwhile, the UE may determine whether to perform a random access procedure with the target cell based on whether the MAC CE includes valid uplink timing advance information of the MAC CE. For example, the UE performs the random access procedure with the target cell when the MAC CE does not include the valid uplink timing advance information. As another example, when the MAC CE includes valid uplink timing advance information, the UE may perform a handover according to the LTM operation without performing a random access procedure with the target cell.

Through the above operations, the UE may perform a faster handover operation than typical L3 handover. In particular, the time required to perform the random access procedure may be reduced through an early synchronization operation.

The operations of the UE and the network node required for the fast cell change operation of the UE through L1/L2 triggering have been described above.

In typical NR technology, cell level mobility (cell change) was provided based on L3 signaling. This results in greater delay, increased overhead, and longer interruption compared to beam level mobility. As an alternative, L1/L2 triggered mobility is considered. In particular, the UE may perform pre-synchronization with the LTM candidate cell before the LTM execution step. However, no specific operation method has been provided for this.

Conceived to address such issues, the disclosure introduces operation technology in an L1/L2 signaling-based cell change/switch process. In particular, the disclosure introduces specific operations related to synchronization technology.

Hereinafter, a 5G NR radio access technology-based mobility providing method will be described. While this description is for convenience of description and ese of understanding, the disclosure may be applied to cell change/switch based on any radio access technology (e.g., 6G). The embodiments described in the disclosure include the content of information elements, procedures, and operations set forth in any NR standard (e.g., TS 38.321, the NR MAC standard, and TS 38.331, the NR RRC standard). Although the disclosure does not contain the content of the definitions, related procedures, and related UE operations for the corresponding information elements, the content set forth in the standards which are known art may be incorporated in the present embodiments. The embodiments provided below may be practiced individually or in combination, which also apparently belongs to the scope of the disclosure.

Load and traffic management (LTM) may be performed during serving cell change (PCell change or SCell change) within a single cell group in the NR stand-alone structure and during serving cell change (SpCell(PCell/PSCell)) change or SCell change) within a single cell group (e.g., MCG or SCG) in the dual connectivity structure. For example, among cells other than the current serving cell for one RRC connected UE, the target PCell and/or target SCells may be indicated by LTM, so that the corresponding PCell/SCells may be configured/modified/added/activated as the serving cell. As another example, among the current serving cells for one RRC connected UE, the target PCell and/or target SCells may be indicated by LTM, so that the corresponding target PCell/SCells may be configured/modified/changed/switched/added/activated as the serving cell.

Intra-CU intra-DU LTM may be performed between different cells associated with the corresponding DU in the intra-DU connected to the corresponding CU in the intra-CU. For example, the corresponding cells may have different PCIs and be inter-cell synchronized. For different DUs connected to the corresponding CU in the intra-CU, intra-CU inter-DU LTM may be performed between the cells associated with the respective DUs. For example, the corresponding cells may have different PCIs and may not be inter-cell synchronized. For example, the corresponding cells may have different PCIs and be inter-cell synchronized.

Any function described below is defined as an individual-UE capability (UE radio capability or UE core network capability) and may be transmitted by the UE to the base station/core network entity (e.g. AMF/SMF) through corresponding signaling. Alternatively, functions may be combined/merged to be defined as the corresponding UE capability and transmitted to the base station/core network entity through corresponding signaling at the request of the UE.

For ease of understanding, the following embodiments will be described based on a scenario where a network node is a base station. . However, this is for convenience of description and ease of understanding. The embodiments are not limited thereto. For example, the embodiments may also be applicable when the network node is a DU. When the network node is a DU, the DU receives information from another DU through a CU and transmits information through a CU. Therefore, it may be necessary to explicitly state in the description that the network node is identified as a DU for describing the embodiments based on a scenario where the network node is a DU.

The base station may transmit/indicate information indicating allowing/supporting/configuring the corresponding function/function combination for any function or any function combination, described below, to the UE through an RRC message. For example, it may be indicated to the UE before, after, or simultaneously with configuring/applying the corresponding function/function combination. The RRC message may be broadcast through system information. Or, it may be indicated to the UE through a dedicated RRC message.

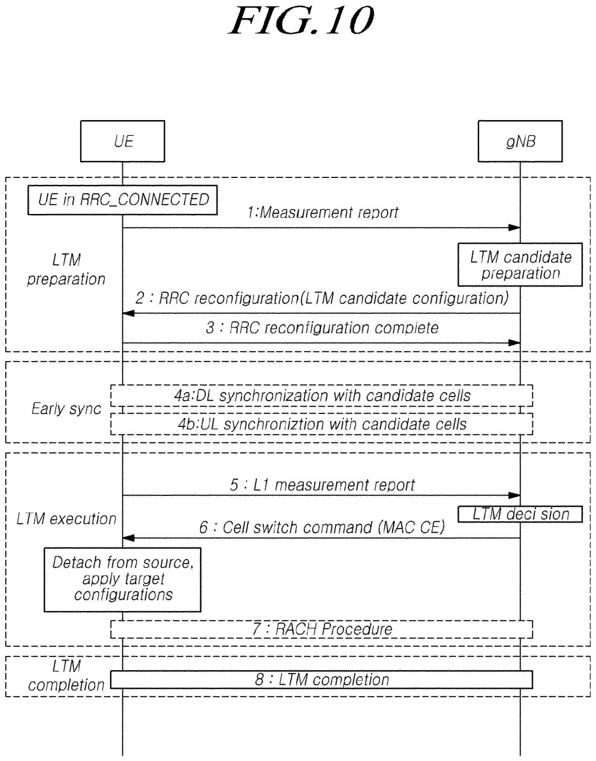

FIG. 10 is a view illustrating a signaling procedure for LTM according to an embodiment.

FIG. 10 illustrates an overall procedure for an LTM operation between a UE and a base station. The procedure is largely divided into LTM preparation, early synchronization, LTM execution, and LTM completion.

Each detailed operation operates as follows.
1. The UE sends a *MeasurementReport* message to the gNB. The gNB decides to use LTM and initiates candidate cell(s) preparation.
2. The gNB transmits an *RRCReconfiguration* message to the UE including the LTM candidate cell configurations of one or multiple candidate cells.
3. The UE stores the LTM candidate cell configurations and transmits a *RRCReconfigurationComplete* message to the gNB.
4a/4b. The UE may perform DL synchronization and TA acquisition with candidate cell(s) before receiving the cell switch command.
5. The UE performs L1 measurements on the configured candidate cell(s), and transmits lower-layer measurement reports to the gNB.
6. The gNB decides to execute cell switch to a target cell and transmits a MAC CE triggering cell switch by including the candidate configuration index of the target cell. The UE switches to the configuration of the target cell.
7. The UE performs random access procedure towards the target cell, if cell switch needs to include performing random access procedure.
8. The UE indicates successful completion of the cell switch towards the target cell.

The UE can perform the steps 4-8 multiple times for subsequent LTM cell switch based on the configuration provided in step 2.

According to FIG. 10, the UE may perform synchronization with the LTM candidate cell in step 4 (4a/4b) before the LTM execution step. Embodiments will be described below in greater detail. Candidate cell will be referred to as the above-described LTM candidate cell.

### Procedure for obtaining timing advance (TA) information for candidate cell(s) before receiving cell switch command

Referring to step 4 of FIG. 10, the UE may perform downlink synchronization and TA acquisition operations before receiving the cell switch command.

The UE may transmit a random access preamble from the source cell (e.g., the network node of the serving cell) to the candidate (e.g., target/special) cell according to the PDCCH order. For example, a UE with two TX/RX capabilities (e.g. simultaneous transmission/reception capabilities through two cells) may transmit a random access preamble to a candidate (e.g., target) cell without detaching from the source serving cell. If the UE has two TX/RX capabilities, the UE may receive a response message/indication information for random access preamble transmission from the candidate (target) cell through the candidate (target) cell. Alternatively, the UE may not receive a response message/indication information for random access preamble transmission. In other words, the monitoring operation for receiving a random access response may not be performed.

As another example, a UE that does not have two TX/RX capabilities (e.g. simultaneous transmission/reception capabilities through two cells) detaches from the source serving cell before random access preamble transmission OK. The UE may transmit a random access preamble to the candidate cell (e.g., target cell). The UE may resume data transmission/reception with the source serving cell. For example, to receive a response message/indication information for random access preamble transmission from the source serving cell, the UE may resume data transmission/reception with the source serving cell. Alternatively, the UE may resume data transmission/reception with the source serving cell after receiving the response message/indication information for random access preamble transmission from the candidate (target) cell.

Random access preamble indices and indication of RACH occasions with the associated SSB indices for each candidate cell may be configured. The PDCCH order from the source cell may include identification/indication information about the candidate cell (e.g., target/special cell) and/or candidate configuration identification information. For example, it may be indicated by a field/bit in DCI format 1_0 for the PDCCH order.

For example, the corresponding candidate cell identification/indication information may indicate the index/ID for indicating the candidate cell configuration RRC/RRC reconfiguration information element/container included in the RRC reconfiguration message or the index/ID identified according to the order of the candidate cell configuration RRC/RRC reconfiguration information element/container included in the RRC reconfiguration message (e.g., in the candidate cell configuration RRC/RRC reconfiguration list included in the RRC reconfiguration message, the corresponding index/ID for the first candidate cell configuration RRC/RRC reconfiguration entry is 0 (1 when the index/ID starts from 1), and the corresponding index/ID for the second candidate cell configuration RRC/RRC reconfiguration entry is 1 (2 when the index/ID starts from 1)). As another example, the candidate cell identification/indication information may indicate the index/ID for indicating the candidate cell configuration included in the LTM cell switch MAC CE (or index/ID for indicating the candidate cell group configuration or index/ID for indicating the candidate configuration or index/ID for indicating the candidate target cell configuration, which are referred to below as an index for indicating the candidate cell configuration for convenience of description).

As another example, the candidate cell identification/indication information may indicate one of the PCI of the candidate target/special cell, additional PCI (e.g., additional PCI in the TCI-UL-State field at TS.38.331) for candidate cells included in the candidate cell group, the serving cell ID (e.g., servingCellId in the TCI-UL-State field at TS.38.331) where the UE's reference signal is configured for candidate cells included in the candidate cell group, SSB index in each candidate cell, and candidate cell logical identifier (logical index in 3GPP rel-17 ICBM).

The UE may receive a response message/indication information for random access preamble transmission from the source serving cell and/or candidate cell (e.g., target cell). For example, the UE may transmit a random access preamble to the candidate target cell and receive response message/indication information therefor from the source serving cell. As another example, the DU associated with the candidate cell (e.g., target/special cell) (or DU including the candidate cell (e.g., target/special cell)) may transmit the corresponding response message/indication information to the CU. The CU may transmit the corresponding response message/indication information to the DU associated with the source serving cell (or DU including the source serving cell). The source serving cell may transmit the corresponding response message/indication information to the UE. As another example, the candidate (target) cell may transmit the corresponding response message/indication information to the UE through the corresponding candidate (target) cell.

Through the RRC reconfiguration message, the UE may indicate configuration information (e.g., LTM candidate cell configuration) for indicating PDCCH order random access preamble transmission/transmission support for early TA acquisition for the candidate target cell before receiving the cell switch command.

For example, the corresponding configuration information may be indicated per candidate cell configuration in the candidate cell configuration RRC/RRC reconfiguration information element/container. As another example, the corresponding configuration information may be configured in the information element distinguished from the candidate cell configuration RRC/RRC reconfiguration information element/container (e.g., outside the corresponding information), and the corresponding information may include one or more of the applied candidate cell configuration list (e.g., candidate cell configuration index/ID list or candidate cell configuration index/ID list) and information for identifying the corresponding group. As another example, the corresponding configuration information may be indicated for each cell requiring early TA acquisition (e.g., special cell and/or SCells) (or for each of one or more cell sets/groups including the candidate target/special cell) in the cell group configuration information for candidate cell configuration.

When the UE indicates (e.g., instructed, provided, receive) PDCCH order random access preamble transmission/transmission support configuration information for early TA acquisition for the candidate target cell before receiving the cell switch command, the corresponding RRC reconfiguration message may include configuration information for indicating response message/indication information reception/reception support for the corresponding random access preamble transmission.

For example, if the base station indicates that response message/indication information reception is required, the UE may transmit the corresponding random access preamble and then start a response window/timer configured/indicated for the corresponding response message/indication information reception. For example, the corresponding response window/timer may start at the first symbol of the earliest CORESET configured in the UE to receive the PDCCH for the Type1-PDCCH CSS set of the candidate (target) cell. As another example, the corresponding response window/timer may start before the first PDCCH OK from the end of the corresponding random access preamble transmission in the candidate (target) cell. As another example, the corresponding response window/timer may start at the first symbol of the earliest CORESET configured in the UE to receive the PDCCH for the Type1-PDCCH CSS set of the source serving cell. As another example, the corresponding response window/timer may start at the first symbol of the earliest CORESET configured in the UE to receive the PDCCH for the Type1-PDCCH CSS set of the source serving cell after the delay/time/duration/gap/value/difference configured/indicated by the base station. As another example, the corresponding response window/timer may start before the first PDCCH OK from the end of the corresponding random access preamble transmission. As another example, the corresponding response window/timer may start before the first PDCCH occasion from the end of the corresponding random access preamble transmission after the delay/time/duration/gap/value/difference configured/indicated by the base station in the source serving cell. The base station may start the response window/timer considering the processing delay time between the candidate target cell and the source serving cell by indicating the delay/time/duration/gap/value/difference.

As another example, if the corresponding response window/timer expires, and/or if response message/indication information including the random access preamble matching the transmitted preamble index is not received, the UE may consider that the reception of the corresponding response message/indication information is not successful.

As an example, the UE may increase the preamble transmission counter by 1. If the preamble transmission counter reaches the preamble transmission maximum (or is equal to the preamble transmission maximum plus 1), it may be considered that the corresponding TA acquisition (or random access procedure) fails (or is completed as failing) when the random access preamble is transmitted from the candidate (target) cell. The UE may indicate/notify the same to the source serving cell. For example, this may be indicated through the MAC CE or UCI or L1 measurement report. The UE may suspend/delay/stop/cancel subsequent random access preamble transmission until before receiving a random access preamble transmission indication by (another) PDCCH order for the corresponding candidate (target) cell from the source serving cell.

As another example, the UE may delete/release/discard/reset/initialize any random access parameter according to the corresponding random access preamble transmission attempt. The UE may transmit the corresponding random access preamble when receiving the random access preamble transmission indication by (another/subsequent) PDCCH order for the corresponding candidate (target) cell from the source serving cell. The UE may start/restart the corresponding response window/timer.

As another example, the base station may configure/instruct the UE to forbid (e.g., not to allow) the corresponding preamble retransmission when it is the case (e.g. under predetermined conditions). For example, the preamble transmission maximum value may be set to 1 which may then be indicated. Or, corresponding indication information may be defined and indicated. The UE may increase the preamble transmission counter by 1. If the preamble transmission counter reaches the preamble transmission maximum (or if it is equal to the preamble transmission maximum plus 1, or if the preamble transmission maximum value is set to an allowed minimum value of the number of preamble transmissions and is reached), it may be considered that the corresponding TA acquisition (or random access procedure) fails (or is completed as failing) for the random access preamble transmitted in the candidate (target) cell. The UE may indicate/notify the same to the source serving cell. For example, this may be indicated through the MAC CE or UCI or L 1 measurement report. The UE may not perform random backoff time selection and/or random access resource selection procedure even when the random access procedure is not (successfully) completed. The UE may release the corresponding random access resource. The UE may cancel/release the corresponding random access attempt. The UE may delete/release/discard/reset/initialize any random access parameter according to the corresponding random access preamble transmission attempt. The UE may transmit the corresponding random access preamble when receiving the random access preamble transmission indication by (another/subsequent) PDCCH order for the corresponding candidate (target) cell from the source serving cell.

As another example, when there is a random access procedure in progress, triggered by the corresponding PDCCH order, the UE, although receiving the same random access preamble for the corresponding candidate (target) cell, or a random access preamble transmission indication by (another) PDCCH order indicating the PRACH mask index, may consider that the same is not the same as the random access procedure in progress. The UE may initialize related UE variables (PREAMBLE_TRANSMISSION_COUNTER, PREAMBLE_POWER_RAMPING_COUNTER, PREAMBLE_RECEIVED_TARGET_POWER, etc.) as the random access starts.

As another example, if the corresponding response window/timer expires, if response message/indication information including the random access preamble matching the transmitted preamble index is not received, and/or if the corresponding random access attempt is one by the PDCCH order for early TA acquisition for the candidate target cell, the UE may consider that the random access attempt (or early TA acquisition) for the candidate target cell fails. The UE may store the corresponding information. The UE may indicate this to the source cell through an arbitrary uplink message. The UE may also indicate information indicating that the information is available to the UE through an RRC message.

As another example, if the corresponding response window/timer expires, if response message/indication information including the random access preamble matching the transmitted preamble index is not received, and/or if the corresponding random access attempt is one by the PDCCH order for early TA acquisition for the candidate target cell, the UE may consider that the corresponding random access response is successful, preventing an additional random access preamble retransmission attempt from occurring.

As another example, the base station may indicate a specific value (e.g. infinity) for the corresponding response window/timer so that the response window/timer does not expire.

As another example, the UE may monitor the PDCCH for receiving the corresponding response message/indication information in the corresponding candidate target cell while the response window/timer is running. As another example, if the UE has two TX/RX capabilities, the UE may monitor the PDCCH for receiving the corresponding response message/indication information in the corresponding candidate target cell.

As another example, the UE may monitor the PDCCH for receiving the corresponding response message/indication information from the corresponding source serving cell while the corresponding response window/timer is running.

As another example, the UE may monitor the PDCCH for receiving the corresponding response message/indication information from the corresponding source serving cell while the corresponding response window/timer is running after the delay/time/duration/gap/value/difference configured/indicated by the base station.

As another example, the response message/indication information may be indicated to the UE through MAC CE or DCI. If a response message is indicated to the UE through MAC CE or DCI, it may be transferred to the UE by the serving cell. To that end, the serving cell may receive at least one of the pieces of information to be included in the MAC CE from the candidate cell. Further, the MAC CE may be transmitted along with the indication commanding the UE to perform a cell switch.

For example, the MAC CE may include one or more of the random access preamble ID, timing advance information (e.g. Timing Advance Command field indicates the index value *T_{A}* used to control the amount of timing adjustment that the MAC entity has to apply in TS 38.213, where the length of the corresponding information field (*T_{A}* index value) may be either 12 bits or 6 bits.), candidate cell configuration index, PCI of the corresponding candidate target/special cell, additional PCI list for candidate cells included in the candidate cell group, candidate cell serving cell ID list where the UE's reference signal is configured, SSB/CSI-RS index to be used in the candidate cell, candidate cell logical identifier and candidate cell C-RNTI.

As another example, when the response message/indication information is transferred from the candidate target cell to the source serving cell through the CU, the F 1 message between the DU associated with the candidate target cell and the CU or between the DUs associated with the source serving cell may include one or more of the random access preamble ID, timing advance information, candidate cell configuration index, PCI of the corresponding candidate target/special cell, additional PCI list for the candidate cells included in the candidate cell group, candidate cell serving cell ID list where the UE's reference signal is configured, SSB/CSI-RS index to be used in the candidate cell, candidate cell logical identifier and candidate cell C-RNTI.

As another example, if the base station indicates that reception of the response message/indication information is not required (or if the base station indicates that reception of the response message/indication information through the corresponding candidate target cell is not required or if the base station does not configure, in the UE, information indicating that reception of the response message/indication information is required or if the base station does not indicate to the UE an RRC message including information indicating that reception of the response message/indication information is required), the UE may transmit the corresponding random access preamble and then detach from the corresponding candidate target cell. The UE may resume data transmission/reception with the source serving cell. The UE does not attempt to receive a random access response message in the candidate target cell. The UE may not perform subsequent random access preamble transmission/retransmission until before receiving the random access preamble transmission/retransmission indication (by the PDCCH order) for the corresponding candidate target cell (through the source serving cell) from the base station. Or, the corresponding random access preamble transmission/retransmission may be suspended/delayed/stopped/canceled.

The base station indicates information for indicating the power value for the corresponding random access preamble transmission/retransmission to the UE. The corresponding information may be indicated to the UE through RRC or MAC CE or DCI. The corresponding value may be indicated with a value distinct from the information (e.g., preambleReceivedTargetPower) for indicating the initial random access preamble power for 4-step/2-step RA type.

As another example, the base station may indicate information for indicating the predetermined number (e.g., maximum number) of retransmissions for the corresponding random access preamble transmission to the UE. And/or the base station may indicate information for indicating the corresponding random access preamble retransmission interval/period to the UE. After transmitting the corresponding random access preamble (if failing to receive response message/indication information therefor or if failing to receive response message/indication information therefor through the source serving cell), the UE may perform the corresponding random access preamble retransmission after the corresponding retransmission interval/period (within the corresponding maximum number of retransmissions).

If failing to receive response message/indication information until the predetermined number (e.g., maximum number) of retransmissions (or if failing to receive response message/indication information through the source serving cell), the UE may indicate/notify the same to the base station. The DCI (e.g., DCI format 1_0) used for PDCCH order in the source cell may indicate the number of random access preamble retransmissions (or the maximum number of random access preamble retransmissions) using any field/bits (e.g., reserved bits). The UE may perform random access preamble retransmission in the candidate target cell (without detaching from the candidate target cell or while maintaining the candidate target cell configuration) until the number of the corresponding random access preamble retransmissions (or the maximum number of retransmissions). Alternatively, the UE may repeat detaching form the source cell for random access preamble transmission/retransmission to the candidate target cell until the number of the corresponding random access preamble retransmissions (or the maximum number of retransmissions) and transmitting the corresponding random access preamble and then resuming data transmission/reception with the corresponding source cell.

As another example, the UE may monitor the PDCCH for receiving the corresponding response message/indication information in the corresponding candidate target cell while the corresponding random access procedure is in progress. As another example, the UE may monitor the PDCCH for receiving the corresponding response message/indication information from the corresponding source serving cell while the corresponding random access procedure is in progress.

As another example, random access preamble retransmission may not be performed in the candidate target cell. PDCCH order random access preamble transmission for early TA acquisition for the candidate target cell may be performed only once. The UE may detach from the source cell for random access preamble transmission to the target cell to transmit the corresponding random access preamble and then detach from the candidate target cell and resume data transmission/reception with the source cell. The response message/indication information for the corresponding random access preamble transmission may be indicated to the UE through the source cell by the candidate target cell.

If the source cell fails to receive the corresponding response message/indication information from the candidate target cell until the duration indicated by the corresponding response window/timer/base station expires, the source cell may be aware that the corresponding random access preamble transmission fails in the target cell. The source cell may instruct the corresponding candidate target cell to transmit the random access preamble based thereupon. Alternatively, the source cell may request/trigger the UE for L1 measurement/reporting for the candidate target cell. Alternatively, the source cell may indicate the cell switch trigger MAC CE including the TA to the UE.

### Timing advance (TA) information maintenance operation

During any time when the signaling procedure for LTM is performed (e.g., at any time, such as after TA acquisition for candidate cell(s) before receiving the cell switch command, or before receiving the cell switch command, or after receiving TA information from the base station), the UE may perform the uplink time alignment maintenance operation.

Through any of the above-described embodiments, the UE may receive timing advance information for the candidate target cell from the base station. When timing advance information is received, and/or if the timing advance parameter (*N*_{TA}) defined in TS 38.211 is maintained for the corresponding candidate target cell, the UE may apply the timing advance information to the corresponding candidate target cell. The UE may start/restart the timing alignment timer associated with the corresponding candidate target cell.

The corresponding operation may be performed in the unit of the candidate target cell, and/or in the unit of the (cell) set/group including the candidate target cell, and/or in the unit of a predetermined level/range of timing advance, and/or in the unit of DU. Configuration information therefor may be indicated to the UE through RRC signaling (e.g., RRC reconfiguration message). The corresponding configuration information may include one or more of the time alignment timer, RSRP threshold/reference value, RSRP offset and timing advance level/range/group indication information. Here, the RSRP threshold denotes a threshold/reference value used for time alignment validation/validity check/identification/control. The RSRP offset may denote an offset value for comparison with the RSRP threshold by adding/increasing/subtracting/decreasing/scaling.

The UE may compare the current RSRP value calculated/measured based on L1 measurement with the RSRP threshold received from the base station (or a value obtained by adding/subtracting/scaling the RSRP offset to the RSRP threshold. For convenience of description, in the following description, comparison is performed with the RSRP threshold, but it is apparent that comparison with a value obtained by adding/subtracting/scaling the RSRP offset to the RSRP threshold falls within the category of the disclosure).

If the current RSRP value calculated/measured based on L1 measurement is smaller than (or smaller than or equal to, or larger than, or larger than or equal to) than the corresponding RSRP threshold, the UE may indicate the same to the base station through L1 signaling (e.g., L1 measurement reporting). If the current RSRP value of the candidate target cell calculated/measured based on L1 measurement is larger than (or larger than or equal to) the corresponding RSRP threshold, and/or if the corresponding time alignment timer is running, the UE may consider that the timing advance for the corresponding candidate target cell is valid/verified.

If the current RSRP value of the candidate target cell calculated/measured based on L1 measurement is smaller than (or smaller than or equal to) the corresponding RSRP threshold, and/or if the corresponding time alignment timer is not running, the UE may consider that the timing advance for the corresponding candidate target cell is not valid (or not verified).

For convenience of description, the embodiments will be described based on RSRP (or L1-RSRP). However, the embodiments are not limited thereto. It is obvious that any measurement quantity (e.g., SINR/L1-SINR, RSSI, CQI, etc.) falls within the category of the disclosure. The timing advance level/range indication information may be information for indicating the timing advance group where the corresponding cell is included, or information for indicating the timing advance group having the same timing advance value as a specific reference cell, or information for indicating the level/range for a difference in inter-cell timing advance from the reference cell of the timing advance group where the corresponding cell is included.

The base station may recognize whether the timing advance for the corresponding candidate target cell is valid/verified based on the information received from the UE. If the base station performs LTM switching to a candidate target cell where the timing advance is not valid, the base station may allow the timing advance information to be included in the MAC CE triggering a cell switch. Otherwise, if the base station performs LTM switching to a candidate target cell where the timing advance is not valid, the base station may allow the MAC CE triggering a cell switch not to include the timing advance information. The MAC CE including the timing advance information and the MAC CE not including the timing advance information may be distinguished through different LCIDs.

As another example, for the RSRP threshold, the RSRP value may be used when the UE receives/obtains the (latest) timing advance information from the base station. For example, when receiving/obtaining the timing advance information through an RRC message including candidate cell configuration RRC/RRC reconfiguration information element/container, when receiving/obtaining timing advance information for candidate cell(s) before receiving the cell switch command, or when receiving/obtaining timing advance information through the MAC CE triggering a cell switch, the UE may measure/store the RSRP for the corresponding candidate target cell (for downlink pathloss reference). This may be used as the RSRP threshold/reference value. The value measured at an adjacent/closest/next period/offset (periodicityandoffset) according to the SMTC configuration (or periodicity and offset/location information on the time domain) when receiving/obtaining the corresponding information may be used as the RSRP threshold/reference value.

The UE may receive RSRP offset information for time alignment verification/validity check from the base station and add/increase/subtract/decrease/scale it to the RSRP threshold and use the same.

As another example, if the current RSRP value of the candidate target cell calculated/measured based on L1 measurement is larger than (or larger than or equal to) the corresponding RSRP threshold, when the corresponding time alignment timer expires, the UE may start/restart the corresponding time alignment timer. As another example, if the current RSRP value of the candidate target cell calculated/measured based on L1 measurement is smaller than (or smaller than or equal to) the corresponding RSRP threshold, the UE may stop/pause/end the corresponding time alignment timer. The UE may notify the base station of the same.

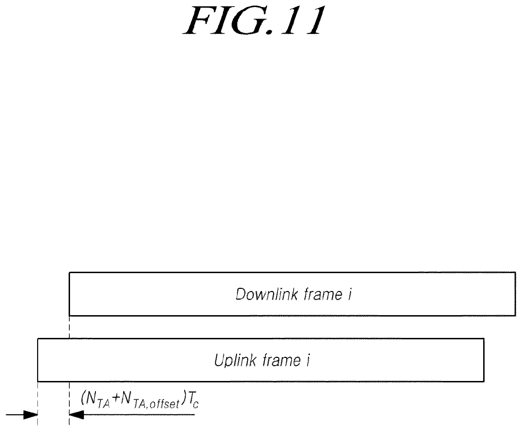

FIG. 11 is a view illustrating an uplink-downlink timing relationship.

Referring to FIG. 11, *N*_{TA} is determined as follows.

Uplink frame number ***i*** for transmission from the UE shall start *T*_{TA} = (*N*_{TA} + *N*_{TA,offset})*T*_{c} before the start of the corresponding downlink frame at the UE where *N*_{TA,offset} is given by [TS 38.213], except for msgA transmission on PUSCH where *N*_{TA} = 0 shall be used.

When the UE receives a cell switch command (e.g., MAC CE triggering a cell switch), the corresponding MAC CE may include timing advance information. In this case, the UE needs to perform a random access procedure after applying the candidate target cell configuration. T he UE may start/restart the corresponding timing alignment timer.

When the UE receives the cell switch command, the corresponding MAC CE may not include the timing advance information. If the uplink synchronization/timing advance is not valid for the corresponding candidate target cell, the UE may perform a random access procedure after applying the candidate target cell configuration. The base station may sequentially/simultaneously indicate random access preamble transmissions by the corresponding MAC CE and the PDCCH order. Alternatively, the random access preamble transmissions by the corresponding MAC CE and the PDCCH order may be simultaneously indicated through one DCI. Alternatively, when the UE receives a random access preamble transmission indication by the PDCCH order in step 4 of FIG. 10, the UE may store one or more of pieces of DCI information (e.g., random access preamble index, SS/PBCH index, PRACH mask index/RACH occasion, or candidate target cell identification information) for the corresponding candidate target cell. When receiving a MAC CE not including the timing advance information, the UE may perform a random access procedure using the same.

As another example, when the UE receives the cell switch command, the corresponding MAC CE may not include the timing advance information. If the timing alignment timer is running for the corresponding candidate target cell, the UE may not perform random access on the corresponding candidate target cell. Otherwise, the UE may perform random access on the corresponding candidate target cell through contention-based random access preamble selection. If at least one SSB with an RSRP value exceeding the RSRP threshold for the SSB is available, an SSB exceeding the RSRP threshold for the corresponding SSB may be selected.

After the UE transmits a random access preamble by the PDCCH order to the candidate target cell, when the corresponding random access is pending (or when there is a running random access procedure triggered by the PDCCH order), while the corresponding response message/indication information is not received, and/or before the corresponding response window/timer expires, the UE may receive the cell switch command from the base station. For example, the UE may continue the running procedure when the corresponding MAC CE does not include TA. For example, the UE may monitor the PDCCH through the source serving cell until the corresponding response window/timer expires. As another example, the UE may disregard/cancel/release/stop the running procedure (and/or delete/release/discard/reset/initialize any random access parameter according to the corresponding random access preamble transmission attempt) and initiate a new random access procedure (or transmit the random access preamble in the corresponding candidate target cell). As another example, when the corresponding MAC CE includes the corresponding TA, the UE may disregard/cancel/release/stop the running procedure. The UE may delete/release/discard/reset/initialize any random access parameter according to the corresponding random access preamble transmission attempt.

The UE may apply the candidate target cell configuration. Information for indicating this may be included in the MAC CE.

### CU/DU signaling

NR provides a split structure that splits a base station (gNB) into a central unit (hereinafter, referred to as CU/gNB-CU for convenience of description) and a distributed unit (hereinafter, referred to as DU/gNB-DU for convenience of description) to support efficient network construction. The radio network is constituted of one set of base stations connected to the 5G core network (5GC) through the NG interface. The base stations are connected to each other through the Xn interface. One base station may be constituted of one gNB-CU and one or more gNB-DUs. The gNB-CU and the gNB-DU are connected to each other through the F1 interface. One gNB-DU may be connected to only one gNB-CU. The NG interface and the Xn-C interface for one base station constituted of the gNB-CU and the gNB-DU are terminated at the gNB-CU. The gNB-DUs connected with the gNB-CU are shown as only one base station to other base stations and the 5GC. The gNB-CU is a logical node hosting the RRC, SDAP and PDCP protocols of the base station. The gNB-DU is a logical node hosting the RLC, MAC and PHY layer of the base station. One gNB-DU supports one or more cells. One cell is supported by only one gNB-DU.

The LTM-based dynamic cell change/switch determination may be performed by the DU. For example, the DU may determine the LTM cell change/switch and the MAC CE information for indicating the LTM cell change/switch considering reporting on the L 1 measurement result of the UE, obtaining the TA of the UE for the candidate target cell, maintaining the timing alignment for the candidate target cell, and the like. The DU may indicate (e.g., provide, transmit) the MAC CE for dynamic cell change/switch to the UE. As described above, the corresponding MAC CE may include index information for identifying a candidate target configuration. The source DU may receive, from the candidate target DU through the CU, one or more of the TA of the corresponding UE, the time alignment timer information, the index information for identifying the candidate target configuration, and the PCI information about the corresponding candidate target special cell. Alternatively, the source DU may receive one or more of the TA of the corresponding UE, the time alignment timer information, the index information for identifying the candidate target configuration, and the PCI information about the candidate target special cell from the candidate target DU through the CU. The candidate target DU may receive one or more of L1 measurement reporting information about the corresponding UE, index information for identifying the candidate target configuration, and PCI information about the candidate target special cell from the source DU through the CU.

The base station/CU may change/modify the radio configuration for the corresponding UE based on the base station load, L3 measurement reporting, or the like. In this case, the base station needs to be aligned with the current wireless configuration configured in the corresponding UE. Accordingly, if the dynamic cell change/switch is triggered/performed/completed by the DU, the CU needs to receive and recognize information for indicating that the dynamic cell change/switch is triggered/performed/completed by the corresponding candidate target configuration. For example, the DU may indicate information for indicating that the LTM cell change/switch has been triggered/performed/completed to the CU.

The corresponding information may be transmitted to the CU when the dynamic cell change/switch is indicated to the UE, or when any identification information (e.g., HARQ ACK, UCI, UL MAC CE, random access preamble, MSG1, or MSGA) for the MAC CE indicating the corresponding dynamic cell change/switch or any identification information for indicating that the corresponding cell change/switch for the MAC CE indicating the corresponding dynamic cell change/switch is successfully completed is received from the UE. The corresponding information may be transmitted to the CU through the F1AP message. The corresponding message may include index information for identifying the corresponding candidate target configuration. The corresponding message may include any information (e.g., candidate cell PCI, candidate cell add PCI, serving cell ID of candidate cell where the UE's reference signal is configured, candidate cell SSB index, etc.) included in the disclosure.

Hereinafter, a measurement operation according to another embodiment will be described. The following embodiments may be applied in any combination with the embodiments described above.

In the typical NR technology, L1 measurement/reporting may be performed only on the serving cell. However, for LTM, it may be required to perform L1 measurement/reporting at candidate cells even if the candidate cells are non-serving cells. Accordingly, such L1 measurement/reporting to the non-serving cell causes more overhead . To reduce the overhead, implementing the S-measure concept for L1 measurement/reporting may be considered.

In the related art, S-measure has been provided based on L3 measurement. If a concept similar to S-measure is introduced for L1 measurement for LTM, L1 measurement/reporting overhead may be reduced.

The base station may indicate the L1 S-measure configuration for LTM to the UE. The corresponding configuration information may include one or more of the threshold for the serving/source/special cell for controlling when the UE is required to perform measurement on a cell (e.g., a non-serving/candidate/target/SCell) other than the serving/source/special cell, the corresponding measurement target reference signal (SSB, CSI-RS), an offset for use by adding/increasing/subtracting/reducing/scaling the threshold, and duration/number of measurements required to meet threshold comparison and the number of beams required to meet the threshold comparison.

For example, if the L1 S-measure configuration for LTM is not configured, or if the L1 S-measure configuration for LTM is set for the SSB, and if the RSRP based on the SSB (SS/PBCH block) in the corresponding serving/source/special cell is lower than (or lower than or equal to) the corresponding threshold indicated by the base station, the UE may derive/perform L1 measurement based on the SSB in the candidate target cell. Otherwise, the UE may not derive/perform the SSB-based L1 measurement in the candidate target cell (or may skip the measurement).

As another example, if the L1 S-measure configuration for LTM is not configured, or if the L1 S-measure configuration for LTM is set for the SSB, and if the RSRP based on the SSB (SS/PBCH block) during consecutive durations/number of measurements indicated by the base station in the corresponding serving/source/special cell is lower than the corresponding threshold indicated by the base station, the UE may derive/perform L1 measurement based on the SSB in the candidate target cell. Otherwise, the UE may not derive/perform the SSB-based L1 measurement in the candidate target cell (or may skip the measurement).

As another example, if the L1 S-measure configuration for LTM is not configured, or if the L1 S-measure configuration for LTM is set for the SSB, and if the number of beams in which the RSRP based on the SSB (SS/PBCH block) in the corresponding serving/source/special cell is better than (or larger than or equal to) the corresponding threshold indicated by the base station is smaller than (or smaller than or equal to) the number indicated by the base station, the UE may derive/perform L1 measurement based on the SSB in the candidate target cell. Otherwise, the UE may not derive/perform the SSB-based L1 measurement in the candidate target cell (or may skip the measurement). As another example, if the L1 S-measure configuration for LTM is configured, or if the L1 S-measure configuration for LTM is set for the SSB, and if the RSRP based on the SSB (SS/PBCH block) in the corresponding serving/source/special cell is larger than (or larger than or equal to) the corresponding threshold indicated by the base station, the UE may not derive/perform (or may skip) L1 measurement based on the SSB in the candidate target cell. Otherwise, the UE may perform the SSB-based L1 measurement in the candidate target cell.

As another example, if the L3 S-measure configuration is not configured, or if the L3 S-measure configuration is set for the SSB, and if the RSRP based on the SSB (SS/PBCH block) after L1 filtering in the corresponding serving/source/special cell is lower than (or lower than or equal to) the corresponding threshold indicated by the base station, the UE may derive/perform L1 measurement based on the SSB in the candidate target cell. Otherwise, the UE may not derive/perform the SSB-based L1 measurement in the candidate target cell (or may skip the measurement).

As another example, if the L1 S-measure configuration for LTM is not configured, or if the L1 S-measure configuration for LTM is set for the CSI-RS, and if the RSRP based on the CSI-RS in the corresponding serving/source/special cell is lower than the corresponding threshold indicated by the base station, the UE may derive/perform L1 measurement based on the SSB/CSI-RS in the candidate target cell. Otherwise, the UE may not derive/perform the SSB/CSI-RS-based L1 measurement in the candidate target cell (or may skip the measurement).

As another example, if the L3/L1 S-measure configuration for LTM is not configured, or if the L3/L1 S-measure configuration for LTM is set for the SSB, and if the RSRP based on the SSB (SS/PBCH block) in the corresponding serving/source/special cell is lower than the corresponding threshold indicated by the base station, the UE may report SSB-based L1 measurement to the base station in the candidate target cell. Otherwise, the UE may not report the SSB-based L1 measurement to the base station in the candidate target cell (or may skip the reporting).

As another example, when L1 measurement reporting for LTM is triggered, if L3 measurement reporting by an event (e.g., A3 event) for triggering L3 handover is triggered, the UE may transmit L1 measurement reporting to the base station/DU through the corresponding PUCCH or PUSCH before L3 measurement reporting. If the DU determines the cell switch, the DU may transmit information indicating that the cell switch has been triggered to the UE to the CU. The corresponding message may include L3 measurement reporting. The CU may know that the cell switch is in progress, so there is no need to trigger the L3 handover.

As another example, if the L1/L3 S-measure configuration for LTM is not configured, or if the L1 S-measure configuration for LTM is set for the SSB, and if the RSRP based on the SSB (SS/PBCH block) in the corresponding serving/source/special cell is lower than (or lower than or equal to) the corresponding threshold indicated by the base station, the UE may derive/perform L3 cell measurement based on the SSB in the corresponding cell (candidate cell/neighbor cell/inter-frequency-cell). Otherwise, the UE may not derive/perform the SSB-based L3 measurement in the corresponding cell (candidate cell/neighbor cell/inter-frequency-cell) (or may skip the measurement).

As another example, if the L1/L3 S-measure configuration for LTM is configured, or if the L1 S-measure configuration for LTM is set for the SSB, and if the RSRP based on the SSB (SS/PBCH block) in the corresponding serving/source/special cell is larger than (or larger than or equal to) the corresponding threshold indicated by the base station, the UE may not derive/perform L3 measurement based on the SSB in the corresponding serving/source/special cell. The UE may not derive/perform (or may skip) SSB-based L3 measurement in the corresponding cell (candidate cell/neighbor cell/inter-frequency-cell).

The L1 measurement configuration may be configured in association with the candidate cell configuration where L1 measurement is to be performed. According to an embodiment, cell group configuration information for candidate cell configuration may be used. The L1 measurement configuration may be included and configured as a sub information element of the cell group configuration information. The cell group configuration information may be used to configure the master cell group (e.g., primary cell group) or secondary cell group, and the corresponding configuration information may be configured through RLC bearer configuration information, MAC-cell group configuration information, physical cell group configuration information, special cell configuration information, and SCell configuration information. The cell group configuration information may include the candidate special and SCell cell configuration according to the cell switch. The L1 measurement configuration may be included in the special cell configuration information (or included as a sub information element) to indicate the measurement configuration for the corresponding candidate special cell. Or, the L1 measurement configuration may be included (or included as a sub information element) in the corresponding special cell configuration information and the corresponding SCell configuration information for the SCell(s) and the candidate special cell where L1 measurement is to be performed, to indicate the measurement configuration for the corresponding candidate special cell and SCell(s). Or, the L1 measurement configuration may be included in the cell group configuration information, as an information element distinguished/separated from the special cell configuration information and SCell configuration information to indicate the measurement configuration for the corresponding candidate special cell and the SCell(s). This may be indicated with the PCI associated with the resource set index associated with the L1 measurement resource.

The L1 measurement configuration may include one or more of information about the number of SS blocks (or the number of CSI-RSs) to be averaged for L1 measurement derivation for the corresponding candidate target cell, the threshold for L1 measurement consolidation per RS index, base station/DU transmission power, threshold/range for the difference between base station/DU transmission power and UE reception power, SSB measurement timing configuration information, the set of SS blocks to be measured within measurement duration by SSB measurement timing configuration information, information for indicating SSB-based RSSI measurement configuration, information for indicating SSB-based SINR measurement configuration, SSB resource set ID (or SSB resource set ID associated with the candidate cell), CSI-RS resource set ID (or CSI-RS resource set ID associated with the candidate cell), carrier frequency/center frequency/subcarrier spacing/frequency band/cell identifier list for the corresponding candidate cell, information for indicating whether to include beam measurement, beam index list to be included in the measurement result, the maximum number of beams to be included in the measurement result, the number of beams exceeding the threshold to be included in the measurement result, the corresponding candidate cell configuration index, the corresponding candidate serving cell index, the corresponding candidate SCellindex, the corresponding candidate cell PCI, L1 measurement enabled/disabled state for the candidate cell, and measurement gap information for the corresponding measurement. The corresponding L1 measurement configuration may be provided as a sub information element in the cell group configuration information used for the corresponding candidate cell configuration. Alternatively, the corresponding L1 measurement configuration may be configured in association with each candidate serving cell/Spcell/Scell configuration included in the cell group configuration information used for the corresponding candidate cell configuration.

As another example, it may be preferable that the cell switch is indicated when the L1 measurement (e.g., L1 RSRP) of the candidate target/neighbor cell is better than the L1 measurement of the serving/source/special cell by some extent. Therefore, the reporting configuration for L1 measurement may include information for indicating the same. For example, the L1 measurement of the candidate target/neighbor cell may separately include the measurement value for a beam where L1 measurement (e.g., L1 RSRP) of the candidate target/neighbor cell is better than a threshold (or the sum of the threshold and an offset), the measurement value for N beams where L1 measurement (e.g., L1 RSRP) of the candidate target/neighbor cell is better than the threshold (or the sum of the threshold and the offset), the measurement value for a beam where L1 measurement (e.g., L1 RSRP) of the serving/source/special cell is worse than the threshold (or the sum of the threshold and the offset), and the measurement value for N beams where L1 measurement (e.g., L1 RSRP) of the serving/source/special cell is worse than the threshold (or the sum of the threshold and the offset). The corresponding measurement reporting information may include one or more of the corresponding measurement value, the corresponding candidate cell configuration index, the PCI of the corresponding target/special cell, additional PCI (e.g., additional PCI in the TCI-UL-State field at TS.38.331) for the candidate cells included in the candidate cell group, serving cell ID where the UE's reference signal is configured for the candidate cells included in the candidate cell group, SSB index list for N beams of candidate cell, resource set index list for N beams of candidate cell, and candidate cell logic identifier.

As another example, the base station may indicate activation/deactivation of L1 measurement for the candidate target cell through the MAC CE or DCI. For example, the base station may indicate a candidate target cell(s) to activate/deactivate L1 measurement by including specific cell group (e.g., timing advance group described in the disclosure) identification information including the corresponding target cell. As another example, the base station may indicate a candidate target cell(s) to activate/deactivate L1 measurement by including the index/ID for indicating the corresponding candidate cell configuration.

As another example, the base station may indicate the initial state of L1 measurement activation/deactivation for the corresponding candidate cell through an RRC reconfiguration message. The UE may indicate that the corresponding candidate cell is in active/inactive state through the corresponding information when receiving the corresponding candidate cell configuration, when configuring/storing the corresponding candidate cell configuration, when applying the corresponding candidate cell, or when configuring/storing/applying L1 measurement for the corresponding candidate cell. If the corresponding information is included, the UE may consider that the L1 measurement/reporting for the corresponding cell is activated/deactivated in the lower layer. The UE may perform the corresponding L1 measurement/reporting only on the candidate cell(s) receiving the L1 measurement activation indication for the candidate cell.

When the candidate cell configured in the UE is SCells configured in the current UE, the UE may perform the corresponding L1 measurement/reporting only on the candidate cell(s) receiving the L1 measurement activation/deactivation indication for the candidate cell.

As described above, according to the present embodiments, it is possible to effectively perform cell change and reduce delay by providing a specific configuration for controlling the LTM and signaling information to the UE.

Hereinafter, the hardware and software configuration of a UE and a network node (e.g., a base station or a DU) capable of performing the operations will be described in detail. The UE and the network node may perform any combination of the above-described operations.

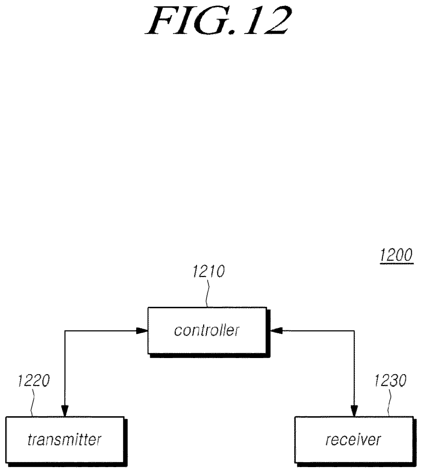

FIG. 12 is a block diagram illustrating a UE according to an embodiment.

Referring to FIG. 12, a UE 1200 performing a mobility control operation may include a receiver 1230 receiving an RRC reconfiguration message including an L1/L2 triggered mobility (LTM) candidate cell configuration from a network node, a transmitter 1220 transmitting a random access preamble to the LTM candidate cell based on a PDCCH order of a serving cell to perform an early synchronization operation for obtaining an uplink timing advance of an LTM candidate cell, and a controller 1210 performing and controlling a cell switching operation to a target cell based on a MAC control element (CE) including a cell switch command received from the serving cell.

The receiver 1230 may receive an RRC reconfiguration message including an LTM candidate cell configuration.

For example, the LTM candidate cell configuration may include at least one of identification information for identifying the LTM candidate cell configuration, physical cell ID (PCI) information about a special cell included in the LTM candidate cell configuration, and configuration information for the early synchronization. For example, one or more LTM candidate cell configurations may be included in the RRC reconfiguration message. Accordingly, identification information (e.g., ltm-CandidateId) may be included for each LTM candidate configuration to identify each LTM candidate cell configuration. As another example, when a special cell is included in the LTM candidate cell configuration, PCI information (e.g., ltm-CandidatePCI) for the special cell may be included. The special cell may be a PCell, a PSCell, an SpCell, or the like. The special cell may refer to a cell that may be a reference for handover or may transmit an uplink signal. As another example, the LTM candidate cell configuration may include configuration information (e.g., ltm-EarlyUL-SyncConfig, ltm-EarlyUL-SyncConfigSUL) for early synchronization. The configuration information for early synchronization may be configured for each LTM candidate cell configuration. Alternatively, the configuration information for early synchronization may be configured for each LTM candidate cell.

The above-described LTM candidate cell configuration may be received through a network node to which the UE has made an RRC connection.

If the LTM candidate cell configuration (e.g., LTM-Config) is received from the network node, the controller 1210 stores the LTM candidate cell configuration (e.g., LTM-Config). Thereafter, the transmitter 1220 transmits an RRC reconfiguration complete message to the network node.

For example, the controller 1210 may perform an early synchronization operation for LTM operation. The early synchronization operation may be performed by the UE to obtain the uplink timing advance of the LTM candidate cell. Alternatively, the early synchronization operation may be performed by the UE to obtain downlink synchronization of the LTM candidate cell. Alternatively, the early synchronization operation may include both the downlink synchronization operation and the uplink timing advance (TA) acquisition operation.

For example, the transmitter 1220 may transmit the random access preamble to the base station or the DU providing the LTM candidate cell based on the PDCCH order of the serving cell in the early synchronization operation. In this case, the controller 1210 is configured not to monitor the random access response to the random access preamble. In other words, unlike the typical random access procedure, the controller 1210 only transmits the random access preamble to the LTM candidate cell and does not perform a monitoring operation in the RAR window to receive a response thereto.

As another example, the PDCCH order may include cell indication information indicating an LTM candidate cell for transmitting a random access preamble. The receiver 1230 may receive a PDCCH order through a serving cell. The PDCCH order may be downlink control information. For example, the PDCCH order may include information indicating which LTM candidate cell to transmit the random access preamble among the plurality of LTM candidate cells corresponding to the LTM candidate cell configuration configured through the RRC reconfiguration message to the UE. The cell indication information may be mapped in ascending order of the identification information for identifying the LTM candidate cell configuration and indicated through a field of downlink control information (DCI) format 1_0. In other words, the PDCCH order is DCI, and the LTM candidate cell may be indicated through the value of the cell indication field of DCI format 1_0. For example, bit field index 0 of the cell indication field may be mapped to the serving cell, another bit field index may be mapped to the candidate cell including configuration information (EarlyUlSyncConfig) for early synchronization, which is a higher layer parameter, according to an ascending order of the candidate ID including LTM cell configuration identification information (ltm-CandidateId), and bit field index 1 may be mapped to the candidate cell having the smallest candidate ID. (The bit field index 0 of the cell indicator field is mapped to the serving cell, and other bit field indexes are mapped to the candidate cells configured with higher layer parameter EarlyUlSyncConfig according to an ascending order of a candidate identity configured by ltm-CandidateId, with the bit field index 1 mapped to the candidate cell with the smallest candidate identity.)

The controller 1210 may transmit the random access preamble according to the PDCCH order and terminate the early synchronization operation.

For example, the receiver 1230 may receive the cell switch command from the network node providing the serving cell through the MAC CE. For example, the MAC CE may include at least of uplink timing advance information, random access preamble information, and target cell identification information about the target cell.

The transmitter 1220 may report the L1 measurement result to the network node before receiving the MAC CE. The network node may determine to perform the LTM operation on the UE based on the L1 measurement result and transmit the MAC CE to instruct to perform the LTM operation to the target cell from among the LTM candidate cells.

Meanwhile, the network node may receive at least one of uplink timing advance information about the LTM candidate cell, random access preamble information, and LTM candidate cell identification information from a target network node where the LTM candidate cell belongs. The network node may transmit the MAC CE to the UE using the information received from another network node and the L1 measurement result.

Meanwhile, when the network node is a distributed unit (DU) providing the serving cell to the UE, and the target network node is another DU providing an LTM candidate cell, at least one of uplink timing advance information, random access preamble information, and LTM candidate cell identification information for LTM candidate cell may be received through the central unit (CU).

For example, the other DU transfers the above-described information to the CU through the F1 message, and the CU transfers the above-described information to the DU providing the serving cell through the F 1 message. The CU is connected to the DU and the other DU to configure one base station.

If the network node is the source base station and the network node providing the LTM candidate cell is another base station, the above-described information may be received through an interface between base stations.

The controller 1210 may determine whether to perform a random access procedure with the target cell based on whether the MAC CE includes valid uplink timing advance information of the MAC CE. For example, the controller 1210 performs the random access procedure with the target cell when the MAC CE does not include the valid uplink timing advance information. As another example, when the MAC CE includes valid uplink timing advance information, the controller 1210 may perform a handover according to the LTM operation without performing a random access procedure with the target cell.

Further, the controller 1210 controls the overall operation of the UE 1200 according to the above-described cell switch operation according to the present embodiment.

The transmitter 1220 and the receiver 1230 are used to transmit or receive signals or messages or data necessary for performing the above-described disclosure, with the network node.

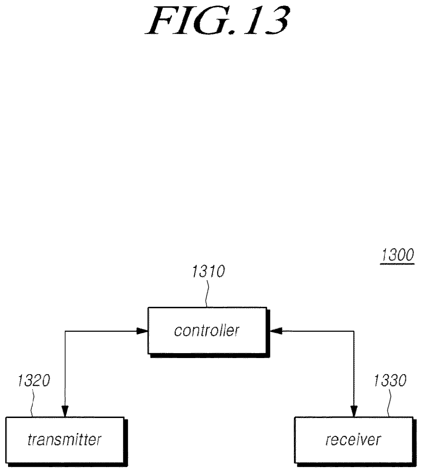

FIG. 13 is a block diagram illustrating a network node according to another embodiment.

Referring to FIG. 13, a network node 1300 controlling a mobility operation of a UE may include a transmitter 1320 transmitting, to the UE, an RRC reconfiguration message including an L1/L2 triggered mobility (LTM) candidate cell configuration and transmitting, to the UE, a PDCCH order for indicating early synchronization for an LTM candidate cell of the UE, and a receiver 1330 receiving at least one of uplink timing advance information about the LTM candidate cell, random access preamble information, and LTM candidate cell identification information from a target network node where the LTM candidate cell belongs. The transmitter 1320 may transmit a MAC control element (MAC CE) including a cell switch command to the target cell to the UE.

Information and configuration different from the typical L3 handover operation may be required to perform the LTM operation. To that end, the transmitter 1320 may transmit an RRC reconfiguration message including an LTM candidate cell configuration to the UE.

For example, the LTM candidate cell configuration may include at least one of identification information for identifying the LTM candidate cell configuration, physical cell ID (PCI) information about a special cell included in the LTM candidate cell configuration, and configuration information for the early synchronization. For example, one or more LTM candidate cell configurations may be included in the RRC reconfiguration message. Accordingly, identification information (e.g., ltm-CandidateId) may be included for each LTM candidate configuration to identify each LTM candidate cell configuration. As another example, when a special cell is included in the LTM candidate cell configuration, PCI information (e.g., ltm-CandidatePCI) for the special cell may be included. The special cell may be a PCell, a PSCell, an SpCell, or the like. The special cell may be referred to as a cell that may be a reference for handover or may transmit an uplink signal. As another example, the LTM candidate cell configuration may include configuration information (e.g., ltm-EarlyUL-SyncConfig, ltm-EarlyUL-SyncConfigSUL) for early synchronization. The configuration information for early synchronization may be configured for each LTM candidate cell configuration. Alternatively, the configuration information for early synchronization may be configured for each LTM candidate cell.

The network node 1300 may be a base station that provides a serving cell when it is not a CU-DU separated structure. When it is a CU-DU separated structure, the network node 1300 may mean a DU that provides a serving cell to the UE. In this case, an LTM operation may be used to control mobility between DUs. In other words, the LTM operation may be used even when changing between DUs in the same base station.

When the LTM candidate cell configuration (e.g., LTM-Config) is received from the network node 1300, the UE stores the LTM candidate cell configuration (e.g., LTM-Config) in the UE. Thereafter, the receiver 1330 receives the RRC reconfiguration complete message transmitted from the UE.

For example, the UE may perform an early synchronization operation for LTM operation. The early synchronization operation may be performed by the UE to obtain the uplink timing advance of the LTM candidate cell. Alternatively, the early synchronization operation may be performed by the UE to obtain downlink synchronization of the LTM candidate cell. Alternatively, the early synchronization operation may include both the downlink synchronization operation and the uplink timing advance (TA) acquisition operation.

To indicate the early synchronization operation of the UE, the transmitter 1320 may transmit a PDCCH order to the UE.

For example, the UE may transmit the random access preamble to the base station or the DU providing the LTM candidate cell based on the PDCCH order of the serving cell in the early synchronization operation. In this case, the UE is configured not to monitor the random access response to the random access preamble. In other words, unlike the typical random access procedure, the UE only transmits the random access preamble to the LTM candidate cell and does not perform a monitoring operation in the RAR window to receive a response thereto.

As another example, the PDCCH order may include cell indication information indicating an LTM candidate cell for transmitting a random access preamble. The transmitter 1320 may transmit a PDCCH order to the UE. The PDCCH order may be downlink control information. For example, the PDCCH order may include information indicating which LTM candidate cell to transmit the random access preamble among the plurality of LTM candidate cells corresponding to the LTM candidate cell configuration configured through the RRC reconfiguration message to the UE. The cell indication information may be mapped in ascending order of the identification information for identifying the LTM candidate cell configuration and indicated through a field of downlink control information (DCI) format 1_0. In other words, the PDCCH order is DCI, and the LTM candidate cell may be indicated through the value of the cell indication field of DCI format 1_0. For example, bit field index 0 of the cell indication field may be mapped to the serving cell, another bit field index may be mapped to the candidate cell including configuration information (EarlyUlSyncConfig) for early synchronization, which is a higher layer parameter, according to an ascending order of the candidate ID including LTM cell configuration identification information (ltm-CandidateId), and bit field index 1 may be mapped to the candidate cell having the smallest candidate ID. (The bit field index 0 of the cell indicator field is mapped to the serving cell, and other bit field indexes are mapped to the candidate cells configured with higher layer parameter EarlyUlSyncConfig according to an ascending order of a candidate identity configured by ltm-CandidateId, with the bit field index 1 mapped to the candidate cell with the smallest candidate identity. )

The UE performs an early synchronization operation on the LTM candidate cell according to the PDCCH order of the network node 1300.

The receiver 1330 may receive information for an LTM operation from another network node (a target network node) that provides the LTM candidate cell to which the UE transmits the random access preamble. Information for LTM operation may be received through an interface between network nodes. For example, when both the network node and the target network node are DUs, information for LTM operation may be transmitted and received through the CU through the message of the F1 interface. Alternatively, when the network node and the target network node are different base stations, the message may be received through a communication interface between the base stations. For example, information for LTM operation may be transferred through the X2 interface.

The transmitter 1320 may transmit the MAC CE to the UE using the information received from the other network node (the target network node) and the L1 measurement result. The MAC CE may include at least of uplink timing advance information, random access preamble information, and target cell identification information about the target cell.

The UE may report the L1 measurement result to the network node before receiving the MAC CE. The controller 1310 may determine to perform the LTM operation on the UE based on the L1 measurement result, and transmit the MAC CE to instruct to perform the LTM operation to the target cell from among the LTM candidate cells.

At least one of the uplink timing advance information, the random access preamble information, and the target cell identification information included in the MAC CE may be used to determine the target cell by the controller 1310. For example, the network node 1300 may receive at least one of uplink timing advance information, random access preamble information, and target cell identification information from two or more LTM candidate cells. The controller 1310 may determine a target cell for the UE to perform a cell switch from among the LTM candidate cells considering the L1 measurement report information received from the UE, and the transmitter 1320 may include at least one of uplink timing advance information, random access preamble information, and target cell identification information received from the other network node of the target cell in the MAC CE and transmit the same.

Meanwhile, the UE may determine whether to perform a random access procedure with the target cell based on whether the MAC CE includes valid uplink timing advance information of the MAC CE. For example, the UE performs the random access procedure with the target cell when the MAC CE does not include the valid uplink timing advance information. As another example, when the MAC CE includes valid uplink timing advance information, the UE may perform a handover according to the LTM operation without performing a random access procedure with the target cell.

Further, the controller 1310 controls the overall operation of the network node 1300 according to the above-described cell switch operation according to the present embodiment.

The transmitter 1320 and the receiver 1330 are used to transmit or receive signals or messages or data necessary for performing the above-described disclosure, with the UE or the other network node.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

## Claims

1. A method for controlling mobility of a user equipment (UE), the method comprising:
receiving a radio resource control (RRC) reconfiguration message including an L1/L2 triggered mobility (LTM) candidate cell configuration from a network node;
transmitting a random access preamble to an LTM candidate cell based on a physical downlink control channel (PDCCH) order of a serving cell to perform an early synchronization operation for obtaining an uplink timing advance of the LTM candidate cell;
receiving a medium access control (MAC) control element (CE) including a cell switch command from the serving cell; and
performing a cell switching operation to a target cell based on the MAC CE.

2. The method of claim 1, wherein the LTM candidate cell configuration includes at least one of identification information for identifying the LTM candidate cell configuration, physical cell ID (PCI) information about a predetermined cell included in the LTM candidate cell configuration, and configuration information for the early synchronization.

3. The method of claim 1, wherein performing the early synchronization is configured not to monitor a random access response for the random access preamble.

4. The method of claim 1, wherein the PDCCH order includes cell indication information indicating the LTM candidate cell for transmitting the random access preamble.

5. The method of claim 4, wherein the cell indication information is mapped in ascending order of the identification information for identifying the LTM candidate cell configuration and indicated through a field of downlink control information (DCI) format 1_0.

6. The method of claim 1, wherein in performing the cell switching operation, whether to perform a random access procedure with the target cell is determined based on whether the MAC CE includes valid uplink timing advance information of the MAC CE.

7. The method of claim 6, wherein performing the cell switching operation performs the random access procedure with the target cell when the MAC CE does not include the valid uplink timing advance information.

8. A method for controlling a mobility operation of a user equipment (UE) by a network node, the method comprising:
transmitting, to the UE, a radio resource control (RRC) reconfiguration message including an L1/L2 triggered mobility (LTM) candidate cell configuration;
transmitting, to the UE, a physical downlink control channel (PDCCH) order for indicating early synchronization for an LTM candidate cell of the UE;
receiving at least one of uplink timing advance information about the LTM candidate cell, random access preamble information, and LTM candidate cell identification information from a target network node where the LTM candidate cell belongs; and
transmitting, to the UE, a medium access control (MAC) control element (CE) including a cell switch command to a target cell.

9. The method of claim 8, wherein the LTM candidate cell configuration includes at least one of identification information for identifying the LTM candidate cell configuration, physical cell ID (PCI) information about a special cell included in the LTM candidate cell configuration, and configuration information for the early synchronization.

10. The method of claim 8, wherein the PDCCH order includes cell indication information indicating the LTM candidate cell for transmitting the random access preamble.

11. The method of claim 10, wherein the cell indication information is mapped in ascending order of the identification information for identifying the LTM candidate cell configuration and indicated through a field of downlink control information (DCI) format 1_0.

12. The method of claim 8, wherein at least one of the uplink timing advance information about the LTM candidate cell, the random access preamble information, and the LTM candidate cell identification information is received through an F1 message from a central unit (CU) when the network node is a distributed unit (DU) providing a serving cell to the UE, and the target network node is another DU providing the LTM candidate cell, and wherein the CU is connected to the DU and the another DU to configure one base station.

13. A user equipment (UE) performing a mobility control operation, comprising:
a receiver configured to receivea radio resource control (RRC) reconfiguration message including an L1/L2 triggered mobility (LTM) candidate cell configuration from a network node;
a transmitter configured to transmit a random access preamble to an LTM candidate cell based on a physical downlink control channel (PDCCH) order of a serving cell to perform an early synchronization operation for obtaining an uplink timing advance of the LTM candidate cell; and
a controller configured to perform a cell switching operation to a target cell based on a medium access control (MAC) control element (CE) including a cell switch command received from the serving cell.

14. The UE of claim 13, wherein the LTM candidate cell configuration includes at least one of identification information for identifying the LTM candidate cell configuration, physical cell ID (PCI) information about a special cell included in the LTM candidate cell configuration, and configuration information for the early synchronization.

15. The UE of claim 13, wherein performing the early synchronization is configured not to monitor a random access response for the random access preamble.
